# EUROPÄISCHE PATENTSCHRIFT

(11) **EP 3 431 330 B1**
(45) Veröffentlichungstag und Bekanntmachung des Hinweises auf die Patenterteilung: **02.09.2020**
(21) Anmeldenummer: 18181366.8
(22) Anmeldetag: 03.07.2018
(51) Int. Cl.: B60N 2/02, B60N 2/62, B60N 2/90

(54) **SITZTIEFENVERSTELLER**
SEAT DEPTH ADJUSTER
DISPOSITIF DE RÉGLAGE DE LA PROFONDEUR D'ASSISE

(30) Priorität: 17.07.2017 DE 102017116010
(43) Veröffentlichungstag der Anmeldung: 23.01.2019
(73) Patentinhaber: Kokinetics GmbH, 65830 Kriftel (DE)
(72) Erfinder: Haßler, Steven, 65520 Bad Camberg (DE); Porth, Tobias, 55130 Mainz (DE)
(74) Vertreter: Patentanwälte und Rechtsanwalt Weiß, Arat & Partner mbB

(56) Entgegenhaltungen:
- DE-A1-102009 018 754
- DE-U1-202016 107 014
- US-A1- 2007 108 817

## Beschreibung

### Technisches Gebiet

Die Erfindung betrifft einen Sitztiefenversteller nach dem Oberbegriff des Anspruchs 1.

### Stand der Technik

Derartige Sitztiefenversteller sind bereits in vielfältiger Form und Ausgestaltung bekannt und gebräuchlich. So wird beispielsweise in der DE 10 2009 018 754 A1 ein Fahrzeugsitz mit einer Sitztiefenverstellung offengelegt.

Daneben wird auf die DE 10 2011 054 927 A1 hingewiesen, wo eine Sitztiefenverstellung für einen Fahrzeugsitz offenbart ist.

Weiter wird auf die US 2007/108817 A1 hingewiesen, welche einen Sitztiefenvertseller für einen Kraftfahrzeugsitz mit einer Grundplatte und eine Trägerplatte beschreibt, wobei die Trägerplatte gegenüber der Grundplatte verschiebbar und festlegbar ist, wobei die Trägerplatte einen Griff umfasst und der Griff über einen Schieber einen Verriegelungsgleiter umfasst, wobei der Verriegelungsgleiter in eine Grundplattenverzahnung der Grundplatte einschiebbar und ausziehbar ist.

Auch wird auf die DE 20 2016 107 014 U1 verwiesen, welche eine Trägerplatte für einen Sitztiefenversteller offenbart, wobei ein Aufnahmeelement zur Aufnahme eines Befestigungselementes vorhanden ist.

### Aufgabe der Erfindung

Die Aufgabe der vorliegenden Erfindung ist es, die Nachteile aus dem Stand der Technik zu überwinden. Insbesondere soll ein Sitztiefenversteller bereitgestellt werden, bei dem jegliche Klappergeräusche und Schleifgeräusche abgestellt sind. Dabei soll aber die Handhabbarkeit nicht beeinträchtigt werden.

### Lösung der Aufgabe

Zur Lösung der Aufgabe führen die Merkmale nach dem Anspruch 1.

Vorteilhafte Ausgestaltungen sind in den Unteransprüchen beschrieben.

Ein erfindungsgemäßer Sitztiefenversteller für einen Kraftfahrzeugsitz weist eine Grundplatte und eine Trägerplatte auf. Dabei ist die Trägerplatte gegenüber der Grundplatte verschiebbar und festlegbar, wobei die Trägerplatte einen Griff umfasst und der Griff über einen Schieber einen Verriegelungsgleiter umfasst, wobei der Verriegelungsgleiter in eine Grundplattenverzahnung der Grundplatte einschiebbar und ausziehbar ist. Der Verriegelungsgleiter weist dabei eine Zahnstruktur auf, welche mit der Verzahnung der Grundplattenverzahnung in Eingriff bringbar ist.

Sämtliche Teile des erfindungsgemäßen Sitztiefenverstellers sind in der Regel aus Kunststoff herstellbar. Selbst der Kraftspeicher kann beispielsweise in Form eines Gummipuffers zur Verfügung gestellt werden. Es können aber auch nur ein paar Teile aus Kunststoff und der Rest aus Metall hergestellt sein.

Der Verriegelungsgleiter umfasst den Kraftspeicher, wobei der Kraftspeicher in Arbeitslage den Verriegelungsgleiter in die Grundplattenverzahnung drückt und dadurch eine manuell durch Betätigen des Griffs in Zusammenhang mit dem Schieber überwindbare Blockade herstellt. Andrücken des Verriegelungsleiters Plattenverzahnung wird vorteilhaft erreicht, dass kein unnötiges Spiel zwischen den Bauteilen mehr vorhanden ist und etwaige Geräusche, wie beispielsweise Klappern oder Quietschen vermieden werden.

Der Begriff des Kraftspeichers umfasste jegliche Art von Federelementen oder auch Gummipuffern, die in irgendeiner Art und Weise Kraft aufnehmen und wieder abgeben können indem sie sich verformen.

Der Schieber weist eine Schieberfeder auf. Diese Schieberfeder dient dazu, dass der Griff immer wieder in die Ausgangsposition zurückgebracht wird, wenn er manuell betätigt wurde. Die Schieberfeder ist in einem rechten Winkel zu dem Kraftspeicher angeordnet. In diesem Ausführungsbeispiel wird von zwei Komponenten gesprochen. Allerdings kann anstatt der der Schieberfeder und dem Kraftspeicher auch eine Schenkelfeder eingesetzt werden, die die beiden Komponenten ersetzen könnte. Die Kräfte würden nach wie vor im rechten Winkel zueinander wirken, jedoch würde lediglich ein einziges Bauteil benötigt.

Die Grundplatte und die Trägerplatte sind über ein Schienensystem zueinander verschiebbar. Das Schienensystem besteht ihren bevorzugten Ausführungsbeispiel aus einer Nut-Federkonstruktion, wobei entweder die Trägerplatte die Nut und die Grundplatte die Feder oder andersherum die Grundplatte die Nut die Trägerplatte die Feder aufweisen. Letztendlich kommt es hierbei nur darauf an, dass die beiden Bauteile in definierten Bahnen zueinander verschiebbar angeordnet sind, um die Trägerplatte bei Bedarf in die Kniekehle des Nutzers des Kraftfahrzeugsitzes verschieben zu können.

Die Grundplatte weist außerdem Befestigungsöffnungen oder Befestigungselemente zur Befestigung an dem Kraftfahrzeugsitz auf. In der Regel ist die Grundplatte mit dem Fahrzeugsitz fest verbunden, wohingegen die Trägerplatte aus dem Umfang des Fahrzeugsitzes heraus bewegbar ist.

Zwischen der Grundplatte und der Trägerplatte sind Federgleitelemente angeordnet. Diese Federgleitelemente dienen der besseren Verschiebbarkeit der Grundplatte zu der Trägerplatte. Sie sollen ein ungewolltes Verkeilen verhindern. Weiter sind zur besseren Handhabbarkeit des erfindungsgemässen Sitztiefenverstellers Federversteller vorgesehen.

Der Verriegelungsgleiter kann ausserdem eine Kraftspeicheraufnahme aufweise, wobei die Kraftspeicheraufnahme den Kraftspeicher positioniert und hält. Das könnte beispielsweise dann der Fall sein, wenn eine Ringfeder vorhanden ist, die den Kraftspeicher darstellt. In einem solchen Fall könnte beispielsweise die Kraftspeicheraufnahme ein Stabelement sein, auf welches die Ringfeder aufgezogen ist.

Der Verriegelungsgleiter ist außerdem als Teil des Schiebers ausgebildet. Das kann beispielsweise bedeuten, dass der Verriegelungsgleiter einstückig mit dem Schieber ausgebildet ist. Es kann aber auch bedeuten, dass der Verriegelungsgleiter ein eigenständiges Teil ist, welches über eine Befestigungskonstruktion oder Steckkonstruktion mit dem Schieber verbunden ist.

Der Schieber ist einends über den Griff in den Einhakarmen der Trägerplatte eingehängt und ragt andernends zwischen die Trägerplatte und die Grundplatte. Dabei ist vorgesehen, dass der Schieber beispielsweise in eine Ausnehmung zwischen Trägerplatte und Grundplatte bewegbar angeordnet ist, wobei auch ein weiteres Schienensystem denkbar ist, dass die Bewegung des Schiebers definiert.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine Draufsicht auf einen Sitztiefenversteller;
- Figur 2: eine Explosionsdarstellung des Sitztiefenverstellers;
- Figur 3: Draufsicht auf einen Sitztiefenversteller ohne Trägerplatte ohne Betätigungsgriff;
- Figur 4: einen vergrößerten Ausschnitt eines Teils der Figur 1.

### Ausführungsbeispiel

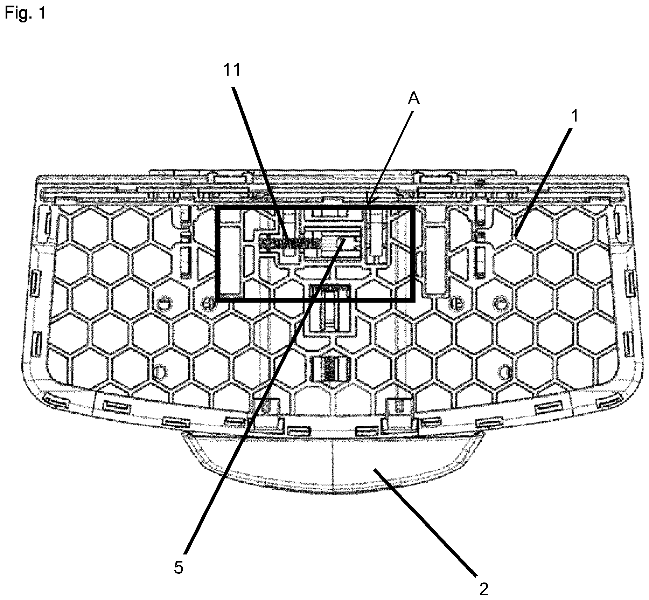

In Figur 1 ist eine Draufsicht eines erfindungsgemässen Sitztiefenverstellers für einen Kraftfahrzeugsitz dargestellt. Dort ist eine Trägerplatte 1 gezeigt. Diese Trägerplatte 1 weist eine Wabenstruktur auf, die größtenteils aus sechseckigen Waben besteht. Die Trägerplatte 1 weist eine lineare Grundseite auf, zu der sich zwei Seitenflanken leicht über 90° wegneigen und über eine etwa parallel zur Grundseite verlaufende von der Grundseite weg leicht konvexe Frontseite übergehen.

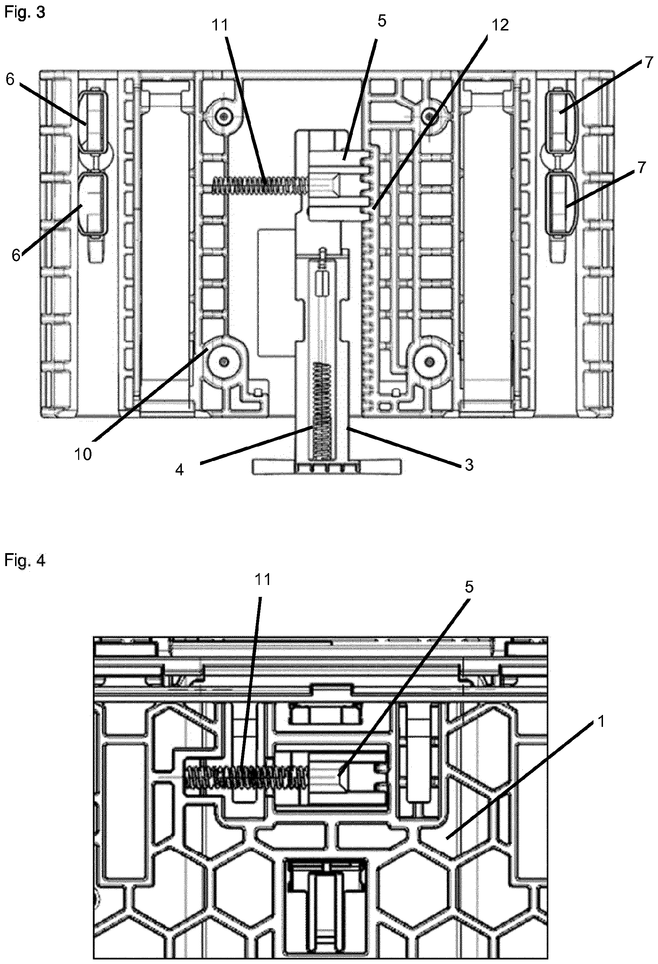

An dieser Frontseite ist ein Griff 2 gezeigt. Außerdem ist ein Teil der Trägerplatte 1 als Ausschnitt A hervorgehoben und in Figur 4 nochmals vergrößert dargestellt. In diesem Ausschnitt A sind ein Kraftspeicher 11 und ein Verriegelungsgleiter 5 gezeigt. In diesem Ausführungsbeispiel ist der Kraftspeicher 11 eine herkömmliche Feder.

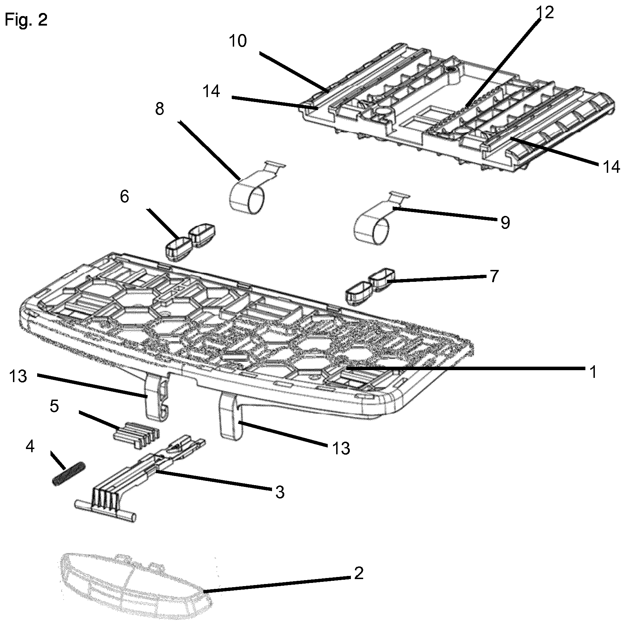

In der Figur 2 ist eine Explosionsdarstellung des erfindungsgemäßen Sitztiefenverstellers gezeigt. Dort ist neben der Trägerplatte 1 eine Grundplatte 10 zu erkennen. Diese Grundplatte 10 weist eine Grundplattenverzahnung 12 auf, wobei die Grundplattenverzahnung 12 einstückig als Teil der Grundplatte 10 ausgeformt ist. Weiter sind in Figur 2 zwei Federversteller 8, 9 gezeigt. Weiter sind zwei Federgleitelemente 6, 7 vorhanden.

Die Grundplatte 10 weist eine Nutkonstruktion 14 auf, in welchen nicht näher gezeigte Federn der Trägerplatte 1 eingreifen. Diese Nut-Federkonstruktion stellt das Schienensystem dar, dass ein Verschieben der Trägerplatte 1 zu der Grundplatte 10 ermöglichen.

Weiterhin sind zwei Einhakarme 13 zu erkennen, welche im rechten Winkel von der Trägerplatte 1 wegragen. Diese Einhakarme 13 weisen entsprechende Aufnahmen auf, in welche der Griff 2 gemeinsam mit dem Schieber 3 eingebracht werden können. Durch das Zusammenspiel des Griffs 2 und des Schieber 3 wird ermöglicht, dass durch Betätigen des Griffs 2 der Schieber 3 die Trägerplatte 1 von der Grundplatte 10 wegschiebt. Der Schieber 3 umfasst außerdem eine Schieberfeder 4 und den Verriegelungsgleiter 5.

Zum Ver- und Entriegeln wird am Sitztiefenversteller der Griff 2 betätigt. Der Griff 2 führt eine lineare Bewegung des Schiebers 3 aus, wodurch der Verriegelungsgleiter 5 in die Grundplattenverzahnung 12 der Grundplatte 1 hinein verfährt. Dabei findet kein vollständiger Formschluss statt, um keine zu hohen Entriegelungskräfte entstehen zu lassen, welche durch die größeren Freiflächen innerhalb der Grundplattenverzahnung 12 ansonsten entstehen würden. Durch das Spiel in der Grundplattenverzahnung 12 entsteht ein Spiel in Längsrichtung des Sitztiefenverstellers, wodurch sich ansonsten Geräusche entwickeln könnten.

Dies wird erfinderisch vorteilhaft dadurch gelöst, dass der Kraftspeicher 11, was in diesem Ausführungsbeispiel eine einfache Druckfeder ist, den Verriegelungsgleiter 5 in die Grundplattenverzahnung 12 eindrückt. Dadurch wird vorteilhaft erreicht, dass das Spiel in Längsrichtung und die Geräuschentwicklung wesentlich reduziert wird. Dabei wird die Federkraft des Kraftspeichers den jeweiligen Erfordernissen angepasst, sodass kein zu großer Formschluss entsteht, aber trotzdem Geräuschentwicklung und Spiel vermieden werden.

In Figur 3 ist eine Draufsicht auf einen Sitztiefenversteller ohne Darstellung der Trägerplatte 1 und des Griffs 2 gezeigt dort ist zu erkennen, wie der Verriegelungsgleiter 5 durch den Kraftspeicher 11 in die Grundplattenverzahnung 12 eingreift. Durch dieses Eingreifen wird aber kein derart hoher Druck erzeugt, dass bei betätigen des Schieber 3 Weg vom Kraftspeicher 11 der Verriegelungsgleiter 5 nicht linear gemeinsam mit dem Schieber 3 in der Grundplattenverzahnung 12 bewegbar wäre.

In Figur 4 ist der Ausschnitt A nochmals vergrößert dargestellt. Dort ist zu erkennen, wie der Kraftspeicher 11 in Arbeitslage den Verriegelungsgleiter 5 in die hier nicht näher gezeigte Grundplattenverzahnung 12 drückt.

In einem anderen nicht gezeigten Ausführungsbeispiel kann anstatt des Kraftspeichers 11 und der Schieberfeder 4 eine Schenkelfeder bzw. eine Drehfeder vorgesehen sein. Diese Schenkelfeder kann dann auf einfache Weise die beiden Komponenten ersetzen, wobei trotzdem die Schenkelfeder einerseits den Verriegelungsgleiter 5 in die Grundplattenverzahnung 12 drückt und andererseits den Schieber 3 immer wieder in die Ausgangsposition zurückdrückt.

**Bezugszeichenliste**

| | |
|---|---|
| 1 | Trägerplatte |
| 2 | Griff |
| 3 | Schieber |
| 4 | Schieberfeder |
| 5 | Verriegelungsgleiter |
| 6 | Federgleitelement |
| 7 | Federqleitelement |
| 8 | Federversteller |
| 9 | Federversteller |
| 10 | Grundplatte |
| 11 | Kraftspeicher |
| 12 | Grundplattenverzahnung |
| 13 | Einhakarme |
| 14 | Nutkonstruktion |
| 15 | |
| 16 | |
| 17 | |
| 18 | |
| 19 | |
| 20 | |
| 21 | |
| 22 | |
| 23 | |
| 24 | |
| | |
| | |
| | |
| | |
| A | Ausschnitt |
| | |
| | |

## Patentansprüche

1. Sitztiefenversteller für einen Kraftfahrzeugsitz mit einer Grundplatte (10) und eine Trägerplatte (1), wobei die Trägerplatte (1) gegenüber der Grundplatte (10) verschiebbar und festlegbar ist, wobei die Trägerplatte (1) einen Griff (2) umfasst, wobei der Griff (2) über einen Schieber (3) einen Verriegelungsgleiter (5) umfasst, wobei der Verriegelungsgleiter (5) in eine Grundplattenverzahnung (12) der Grundplatte (10) einschiebbar und ausziehbar ist,
wobei der Verriegelungsgleiter (5) einen Kraftspeicher (11) oder eine Schenkelfeder umfasst, wobei der Kraftspeicher (11) oder die Schenkelfeder in Arbeitslage den Verriegelungsgleiter (5) in die Grundplattenverzahnung (12) drückt, wobei die Grundplatte (10) und die Trägerplatte (1) über ein Schienensystem zueinander verschiebbar sind, **dadurch gekennzeichnet, dass** zwischen der Grundplatte (10) und der Trägerplatte (1) Federgleitelemente (6, 7) angeordnet sind, wobei zur Verschiebbarkeit der Trägerplatte (1) zu der Grundplatte (10) Federversteller (8, 9) angeordnet sind.

2. Sitztiefenversteller nach Anspruch 1, **dadurch gekennzeichnet, dass** der Schieber (3) eine Schieberfeder (4) aufweist.

3. Sitztiefenversteller nach Anspruch 2, **dadurch gekennzeichnet, dass** die Schieberfeder (4) in einem rechten Winkel zu dem Kraftspeicher (11) angeordnet ist.

4. Sitztiefenversteller nach einem der vorigen Ansprüche, **dadurch gekennzeichnet, dass** die Grundplatte (10) Befestigungsöffnungen oder Befestigungselemente zur Befestigung an dem Kraftfahrzeugsitz aufweist.

5. Sitztiefenversteller nach einem der vorigen Ansprüche, **dadurch gekennzeichnet, dass** der Verriegelungsgleiter (5) eine Kraftspeicheraufnahme aufweist, wobei die Kraftspeicheraufnahme den Kraftspeicher (11) positioniert und hält.

6. Sitztiefenversteller nach einem der vorigen Ansprüche, **dadurch gekennzeichnet, dass** der Verriegelungsgleiter (5) als Teil des Schiebers (3) ausgebildet ist.

7. Sitztiefenversteller nach einem der vorigen Ansprüche, **dadurch gekennzeichnet, dass** der Schieber (3) einends über den Griff (2) in Einhakarmen (13) der Trägerplatte (1) eingehängt ist und andernends zwischen die Trägerplatte (1) und die Grundplatte (10) ragt.

## Claims

1. Seat depth adjuster for a motor vehicle seat with a base plate (10) and a carrier plate (1), whereat the carrier plate (1) being displaceable and fixable relative to the base plate (10), wherein the carrier plate (1) comprises a handle (2), wherein the handle (2) comprises a locking slider (5) via a slide (3), wherein the locking slider (5) can be retractable and extractable of a base plate toothing (12) of the base plate (10), wherein the locking slider (5) comprises an power accumulator (11) or a leg spring, wherein in the working position the power accumulator (11) or the leg spring presses the locking slider (5) into the base plate toothing (12), wherein the base plate (10) and the carrier plate (1) are displaceable relative to one another via a rail system,
**characterized in that**,
spring sliding elements (6, 7) are arranged between the base plate (10) and the carrier plate (1), wherein spring adjusters (8, 9) are arranged for displaceability of the carrier plate (1) relative to the base plate (10).

2. Seat depth adjuster according to claim 1, **characterized in that** the slider (3) has a slide spring (4).

3. Seat depth adjuster according to claim 2, **characterized in that** the slide spring (4) is arranged at a right angle to the power accumulator (11).

4. Seat depth adjuster according to one of the previous claims, **characterized in that** the base plate (10) has fastening openings or fastening elements for fastening to the motor vehicle seat.

5. Seat depth adjuster according to one of the previous claims, **characterized in that** the locking slider (5) has a power accumulator receptacle, wherein the power accumulator receptacle positions and holds the power accumulator (11).

6. Seat depth adjuster according to one of the previous claims, **characterized in that** the locking slider (5) is designed as part of the slider (3).

7. Seat depth adjuster according to one of the previous claims, **characterized in that** the slider (3) is suspended at one end via the handle (2) in hook-in arms (13) of the carrier plate (1) and at the other end extend between the carrier plate (1) and the base plate (10).

## Revendications

1. Dispositif de réglage de la profondeur d'assise pour un siège de véhicule automobile avec une plaque de base (10) et une plaque de support (1), dans lequel la plaque de support (1) peut être déplacée et fixée par rapport à la plaque de base (10), dans lequel la plaque de support (1) comporte une poignée (2), dans lequel la poignée (2) comporte, par l'intermédiaire d'un coulisseau (3), un patin de verrouillage (5), dans lequel le patin de verrouillage (5) peut être engagé dans et extrait d'une denture de plaque de base (12) de la plaque de base (10),
dans lequel le patin de verrouillage (5) comporte un accumulateur d'énergie (11) ou un ressort à branches, dans lequel l'accumulateur d'énergie (11) ou le ressort à branches pousse, en position de travail, le patin de verrouillage (5) dans la denture de plaque de base (12), dans lequel la plaque de base (10) et la plaque de support (1) peuvent être déplacées l'une par rapport à l'autre par l'intermédiaire d'un système de rails,
**caractérisé par le fait qu'**entre la plaque de base (10) et la plaque support (1) sont disposés des éléments coulissants à ressort (6, 7), des régleurs de ressort (8, 9) destinés à permettre le déplacement de la plaque support (1) par rapport à la plaque de base (10) étant disposés.

2. Régleur de profondeur d'assise selon la revendication 1, **caractérisé par le fait que** le coulisseau (3) présente un ressort de coulisseau (4).

3. Régleur de profondeur d'assise selon la revendication 2, **caractérisé par le fait que** le ressort de coulisseau (4) est disposé à angle droit par rapport à l'accumulateur d'énergie (11).

4. Régleur de profondeur d'assise selon l'une des revendications précédentes, **caractérisé par le fait que** la plaque de base (10) présente des ouvertures de fixation ou des éléments de fixation pour la fixation au siège de véhicule automobile.

5. Régleur de profondeur d'assise selon l'une des revendications précédentes, **caractérisé par le fait que** le patin de verrouillage (5) présente un réceptacle d'accumulateur d'énergie, dans lequel le réceptacle d'accumulateur d'énergie positionne et maintient l'accumulateur d'énergie (11).

6. Régleur de profondeur d'assise selon l'une des revendications précédentes, **caractérisé par le fait que** le patin de verrouillage (5) est réalisé comme partie du coulisseau (3).

7. Régleur de profondeur d'assise selon l'une des revendications précédentes, **caractérisé par le fait que** le coulisseau (3) est suspendu, à une extrémité, par l'intermédiaire de la poignée (2), dans les bras d'accrochage (13) de la plaque support (1) et s'engage, à l'autre extrémité, entre la plaque support (1) et la plaque de base (10).
